# EUROPEAN PATENT SPECIFICATION

(11) **EP 1 360 376 B1**
(45) Date of publication and mention of the grant of the patent: **09.05.2007**
(21) Application number: 02710166.6
(22) Date of filing: 04.02.2002
(51) Int. Cl.: E01F 8/00, E04B 2/74, F16B 5/06

(54) **A CLAMP CONNECTION**
KLEMMENVERBINDUNG
ELEMENT DE LIAISON ENTRE UN POTEAU ET UN PANNEAU

(30) Priority: 12.02.2001 GB 0103399
(43) Date of publication of application: 12.11.2003
(60) Divisional application: 06004150.6
(73) Proprietor: SGB Services Limited, Leatherhead, Surrey KT22 7SG (GB)
(72) Inventor: BLACK, Mark, Jason, Brighton, East Sussex BN2 2YS (GB)
(74) Representative: Parry, Simon James
(86) International application number: PCT/GB2002/000470
(87) International publication number: WO 2002/064891

(56) References cited:
- GB-A- 2 325 945

## Description

**THE PRESENT INVENTION** relates to a connection, and more particularly to a connection between a post and a panel.

There is a requirement for a connection that enables a panel to be supported at selected angles relative to a support post. For example, when noise-absorbing barriers are to be mounted in position, adjacent a road or railway, the panels are typically supported on a plurality of spaced-apart posts. The spaced-apart posts have to follow the line of the road or railway and may thus not be aligned in a linear way. Consequently, whilst some panels may be connected to a support post so that the panels on opposed sides of the support posts are parallel with each other, in many cases the panels will be connected to the support posts in such a way that the panels on opposite sides of the support posts are at specific angles to each other. It is thus desirable to provide an arrangement in which each panel may be connected to each support post in any one of a selected number of orientations.

GB-A-2 325 945 discloses an arrangement of posts and angularly adjustable panels, the panels being adapted to be carried by the posts with each post being provided with an arcuate concave support portion. Each of the panels has a flange bearing a convex arcuate portion engageable therewith, and securable by clamping means. The clamping means may comprise a plate urged against the face of the respective post by the cooperation of a sloping slot in the plate, and a pin, the pin spanning blocks which are attached to the post.

The present invention seeks to provide an arrangement of this type.

According to this invention there is provided an arrangement for connecting a post to a panel comprising the post, a connecting element for attachment to the panel, and clamping means for clamping the connection element to the post according to claim 1.

Preferably the vertical element presenting a generally cylindrical exterior wall is supported by means of a vertical web extending from one end of the arcuate wall, the said vertical element having a projecting rib located at a position diametrically opposed to said web, the semi-circular wall mounted on the connecting element being provided with inwardly directed lugs at opposed ends thereof.

Conveniently the semi-circular wall of the connecting element is mounted on a plate, means being provided connecting the plate to the panel.

Advantageously the post carries two said formations, each formation being adapted to be associated with a respective connecting element on a respective panel.

Advantageously, the post carries two formations, each formation comprising a vertical arcuate wall and a vertical element spaced therefrom presenting a generally cylindrical exterior wall, the centre of radius of each said vertical element being substantially coincident with the centre of radius of the respective arcuate wall, a respective arcuate channel of substantially uniform width being provided between each said vertical element of the associated arcuate wall, each panel carrying a respective connecting element, each connecting element carrying a substantially semi-circular wall dimensioned to be received within a respective channel, the clamping means being mounted on the post and adapted to engage said semi-circular walls to clamp the panel in position.

Preferably the clamping means comprises a clamping element mounted on a shaft protruding from the post, the clamping element being movable between a release position in which it does not engage the semi-circular wall, and an engaged position in which it engages the semi-circular wall of each of the connecting elements to clamp the panels in position.

Conveniently the clamping means comprises a pivotally mounted cam element adapted to drive the clamping means to the engaged position. Alternatively the clamping means comprises a wedge adapted to drive the clamping means to the engaged position.

Advantageously the shaft is provided at one end with a lug adapted to be inserted through an aperture formed in the post and to be rotated to engage part of the interior of the post.

Preferably the clamping means comprises:
- a first element protruding from the post; and a clamping element moveable relative to the first element between a release position in which the clamping element does not engage the semi-circular wall and an engaged position in which the clamping element engages the semi-circular wall of each of the connecting elements to clamp the panels in position; the first element carrying a projection and the clamping element having a bearing surface; the clamping means further comprising
- a wedge component moveable with respect to the first element and the clamping element, the wedge component comprising a pair of opposed and diverging bearing edges, and an elongate guide located between the bearing edges and at an acute angle to each bearing edge; the guide and projection being configured to engage each other for sliding movement relative to each other as the wedge component is moved relative to the first element;
the arrangement being such that the wedge component can be oriented with either of its bearing edges bearing against the bearing surface, so that movement of the wedge component relative to the first element drives the projection and bearing surface apart, hence driving the clamping element from the release position to the engaged position.

Conveniently the guide is in the form of an elongate slot configured to receive the projection for sliding movement therein.

Advantageously each bearing edge is substantially straight.

Preferably the guide is substantially coincident with the bisector of the angle between the two bearing edges.

Conveniently the end of the guide nearest to the point of divergence of the bearing edges is configured to allow pivotal movement between the guide and the projection when the projection is located at said end of the guide, and hence allow pivotal movement between the wedge component and the first element.

Advantageously the wedge component has a cam surface in the region of the point of divergence of the bearing edges, the cam surface being configured to bear against the bearing surface and to drive the bearing surface and the projection apart during said pivotal movement between the wedge component and the first element.

Preferably the wedge component and the wedge element are held captive with respect to each other.

Conveniently the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.

Advantageously the first element is a shaft and is provided at one end with a lug adapted to be inserted through an aperture formed in the post and to engage part of the interior of the post.

Preferably each vertical element has a protruding rib on the cylindrical exterior wall thereof and the semi-circular wall carries two inwardly directed lugs at opposed ends thereof.

Conveniently the rib and lugs are configured to permit each panel to move, relative to the post, through a predetermined arc.

Advantageously the arc is substantially 135°.

In order that the invention may be more readily understood, and so that further features thereof may be appreciated, the invention will now be described, by way of example, with reference to the accompanying drawings in which:
FIGURE 1 is a perspective front view of part of a panel arrangement,
FIGURE 2 is a rear view of the embodiment shown in Figure 1,
FIGURE 3 is an exploded view of part of the support post, and a clamp mechanism,

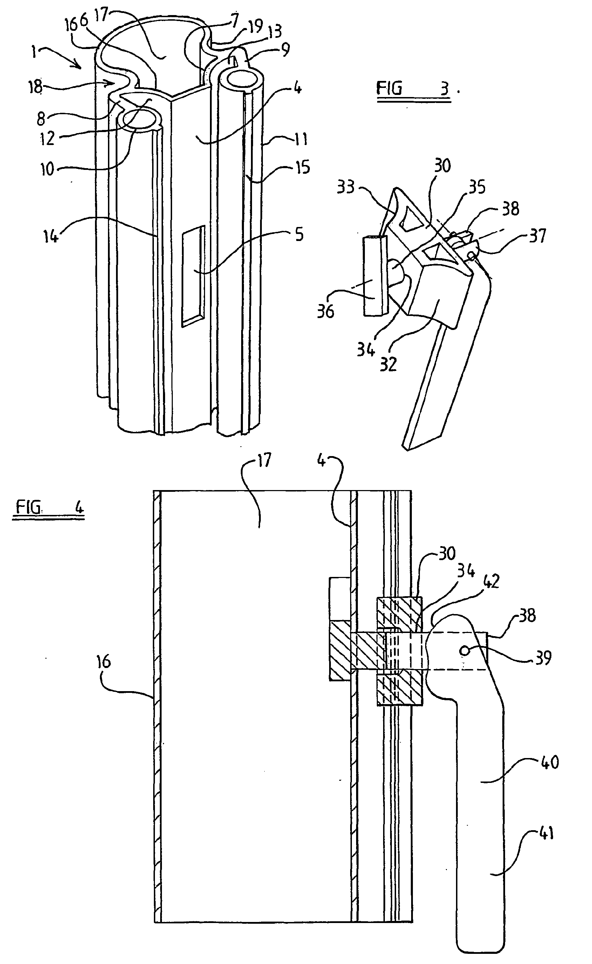

FIGURE 4 is a side sectional view of the support post, and a clamp mechanism,
FIGURE 5 is a top plan view showing the arrangement of Figure 1 in the position illustrated in Figure 1;
FIGURE 6 is a view corresponding to Figure 5 showing the arrangement of Figure 1 in a different position;
FIGURE 7 is a perspective view of a wedge arrangement which can be used as an alternative clamp mechanism;
FIGURE 8 is a perspective view of part of a support post configured for use with the clamp mechanism of Figure 7;
FIGURE 9 comprises a series of side-sectional views of the wedge arrangement of Figure 7, illustrating the arrangement in a number of alternate positions; and
FIGURE 10 comprises a series of side-sectional views of the wedge arrangement of Figure 7 illustrating the arrangement in a number of different alternate positions.

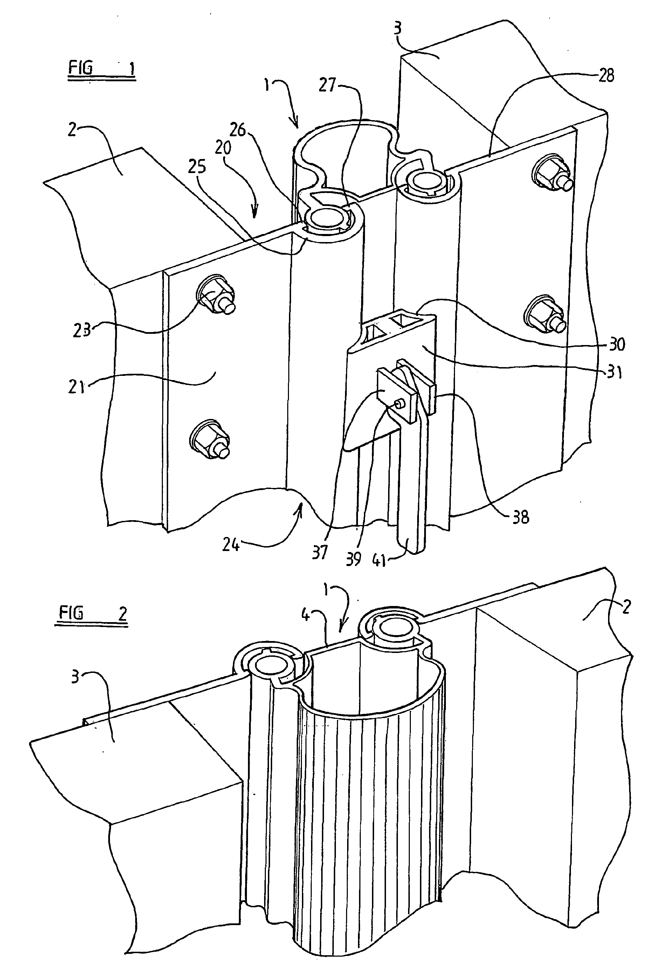

Referring to Figures 1 and 2 of the accompanying drawings, a connection is illustrated between a vertical post 1 and two panels 2, 3. The panels may, for example, be of sound-absorbing material.

The post 1 may be formed as an extrusion of aluminium or the like. The extrusion is of complex cross-section, but is of symmetrical form. The post 1 is shown most clearly in Figure 3. The post 1 has a planar front face 4. The plane of symmetry of the post is perpendicular to the front face 4. The front face 4 is provided with a plurality of vertically spaced-apart rectangular apertures 5, for a purpose which will become clear hereinafter.

Extended rearwardly and outwardly from the front face 4 are two vertical arcuate walls 6, 7. The walls have approximately 90° of arc and terminate with forwardly and inwardly directed vertical webs 9. The web 8 carries, at its free end, a vertical tubular element 10 and the web 9 carries a corresponding vertical tubular element 11. The tubular element 10 has its centre of radius aligned with the centre of curvature of the arcuate wall 6 so that a channel 12 of arcuate form and of uniform cross-section is defined between the cylindrical outer wall defined by the tubular element 10 and the adjacent face of the arcuate wall 6. Similarly, the tubular element 11 has its centre of radius co-incident with the centre of curvature of the arcuate wall 6 so that a channel 13 of uniform width is established between the exterior of the tubular element 11 and the adjacent arcuate wall 7.

The tubular element 10 carries an axially extending projecting rib 14 on the exterior thereof at a position diametrically opposed to the vertical web 8. The tubular element 11 carries a corresponding rib 15. The rearward surfaces of the arcuate walls 6 and 7 carry a rearwardly directed formation 16 which, together with the arcuate wall 6, 7 and the front wall 4 bound a hollow interior 17 of the post 1. In the embodiment shown, the rearwardly directed portion 16 has two inwardly directed or re-entrant portions 18, 19 which constitute finger-grips. However, the finger grabs are an optional feature.

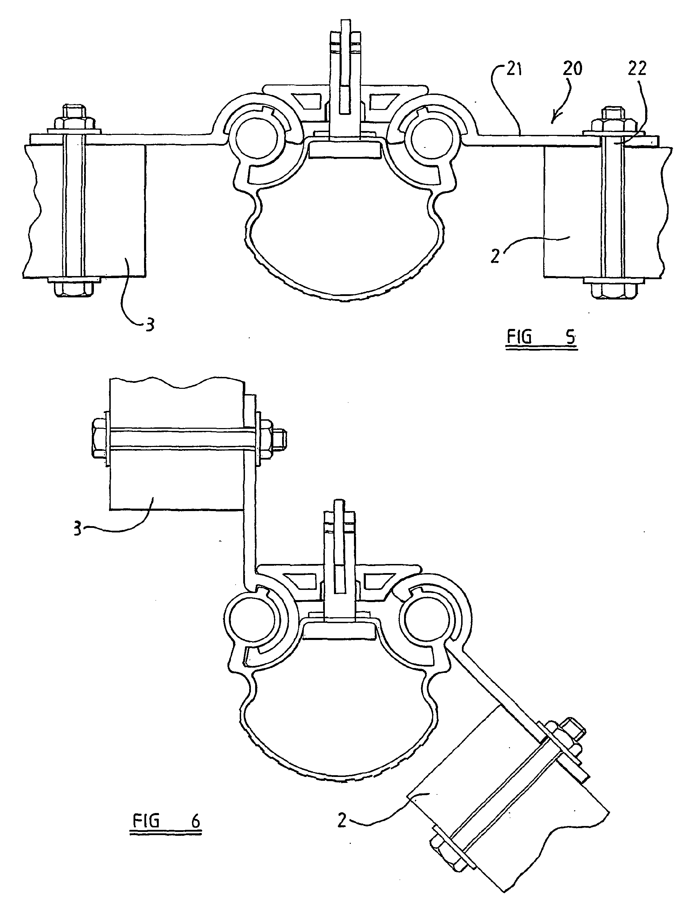

The panel 2 is provided with a connecting element or mounting element 20. The mounting element 20 comprises a plate 21 provided with apertures 22 (see Figure 5) to receive bolts 23. The plate 21 is connected to the panel 2 by the bolts 23 so that one longitudinal edge of the plate projects beyond the end of the panel 2. That longitudinal edge of the plate 21 carries a formation 24 adapted to engage and co-operate with the formation constituted by the arcuate wall 6 and the tubular element 10 of the post 1 as described above. The formation 24 comprises a vertical semi-circular wall 25 mounted to one surface of the plate 21. The semi-circular wall 25 has an internal radius which is slightly greater than the distance between the centre of radius of the tubular element 10 and the radially outer-most surface of the rib 14. The semi-circular wall 25 has an outer radius which is slightly less than the radius of curvature of the inner surface of the arcuate wall 6. The semi-circular wall 25 carries, at the end adjacent the plate 21, a radially inwardly directed lug 26 and carries, at its opposite end, a radially inwardly directed lug 27. The lug 26 effectively constitutes an extension of the plate 21. The distance between the inner-most ends of the lugs 26, 27 is slightly greater than the diameter of the tubular element 10.

The formation 24 may be engaged with the formation constituted by the arcuate wall 6 and the tubular element 10 simply by offering up the formation 24 to the formation provided on the post 1 with the rib 14 being positioned to enter between the inwardly directed lugs 26, 27. The formation 24 may thus be positioned with the rib 14 adjacent the inner surface of the semi-circular wall 25, and the inwardly directed lugs 26, 27 immediately adjacent the exterior of the tubular element 10. The entire panel 2 may then be rotated about a rotational axis which is coincident with the central axis of the tubular element 10. The lug 27, and the associated part of the arcuate wall 25 may thus be selectively moved into and out of the arcuate channel 12. The angle of movement of the panel above the said axis is limited by positions in which the rib 14 engages one of the lugs 26 or 27.

The panel 3 is provided with a support plate 28 which is equivalent to the support plate 20 as described above, but which is a mirror image thereof, and which is adapted to be engaged with the formation constituted by the arcuate wall 7, and the tubular element 11 present on the post 1.

A clamping element 30 is provided which is preferably formed of an appropriate metal extrusion, the element 30 having a planar outer face 31 and two arcuate generally rearwardly directed faces, each of which has a radius of curvature equal to the exterior radius of curvature of the arcuate wall 25. A bore 34 is provided which passes through the clamping element 30, the bore extending perpendicularly to the front face 31 and passing between the two arcuate faces 32, 33. A shaft 35 passes through the bore. The end of the shaft passing between the arcuate faces 32, 33 carries a locking lug 36. The locking lug 36 is dimensioned to be insertable into the hollow interior 17 of the post 1 through the aperture 5. The lug 36 has a greater length than width so that, when inserted through the aperture, the lug may be rotated within the hollow interior 17 of the post 1 by rotating the shaft 35, thus bringing end portions of the lug into firm engagement with the parts of the arcuate walls 6, 7 that are to the interior of the hollow post 1.

The shaft 35 carries, at its other end, two parallel adjacent support plates 37, 38, and a transverse pin 39 extends between the support plates 37, 38 at a position spaced away from the planar front face 31 of the clamping element 30. Pivotally mounted on the pin 39 is a cam lever 40.

The cam lever 40 may rotate about an axis defined by the pin 39. The cam lever 40 has an elongate handle 41, and a curved cam surface 42 positioned to engage the planar face 31 provided on the clamping element 30.

It is to be understood that in locating a plurality of panels, such as the panels 2, 3, in position, initially a plurality of posts will be located in position with an appropriate spacing. The panels that are to be connected to a particular post 1, such as the panels 2, 3, as shown in the accompanying drawings, will then be offered up to the posts in such a way that the formation, such as the formation 24 on the plate 21, will be brought into engagement with the co-operating formations provided on the post. The clamping elements 30 may then be loosely mounted in position by initially moving the cam lever 40 to such a position that the clamping element 30 is spaced as far as possible from the locking lug 36, and then inserting the locking lug 36 within the aperture 5 and rotating the shaft 35 so that the lug 36 is rotated within the hollow interior 17 of the post 1, so that parts of the lug 36 engage the interior parts of the arcuate walls 6, 7 within the hollow interior 17 of the post, this movement bringing the plates 37 and 38 to the condition illustrated in Figure 1 in which they are substantially vertical and the pin 39 extending between them is substantially horizontal. The lever arm 41 may then be moved towards the position shown in Figure 1, which brings part of the cam face 42 into engagement with the front face 31 of the clamping element 30, thus driving the arcuate faces 32, 33 of the clamping element 30 into firm engagement with the exterior of the arcuate wall 25 of the mounting arrangement 20 and the corresponding arcuate wall of the mounting arrangement 28. A plurality of clamping elements 30 will be provided at vertically spaced-apart positions on the post 1, and thus the panels may be firmly connected to the post.

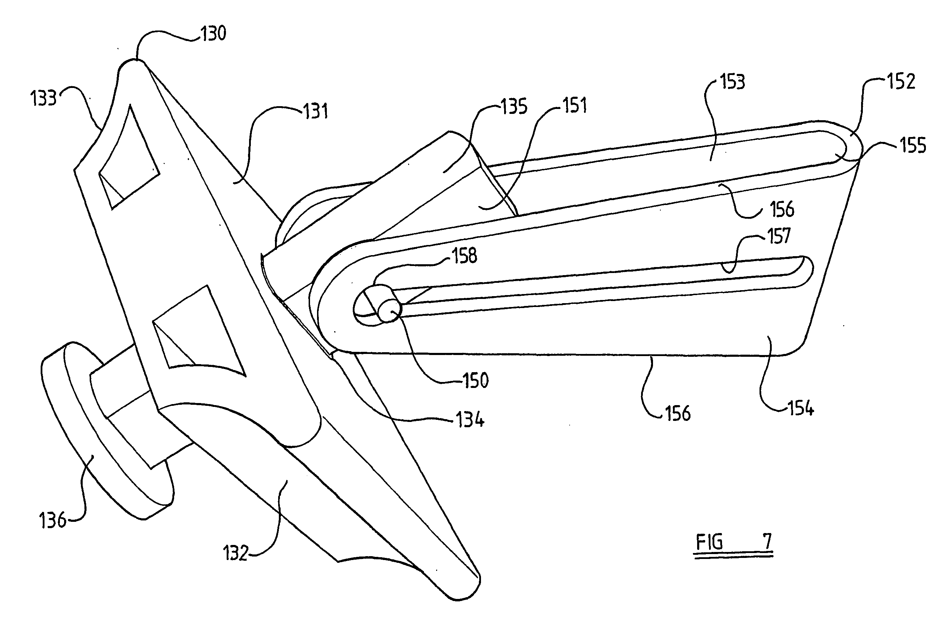

As can be seen in Figure 5, the panels 2 and 3 may be substantially axially aligned, but as can be seen in Figure 6, the panel 3 may be moved so as to extend substantially forwardly of the post, and the panel 2 may be moved to extend rearwardly of the post. Of course, the panels may adopt any desired intermediate position. Thus the panels may each adopt an angle, relative to the post, within a wide range of permissible angles, up to an angle of arc of 135°.

In an alternative embodiment a wedge may be used instead of a cam lever.

Figure 7 illustrates an alternative type of clamp arrangement which can be used to secure the panels 2, 3 to the post 1. The arrangement illustrated in Figure 7 is a wedge arrangement.

The clamp arrangement illustrated in Figure 7, comprises a clamping element 130 of generally identical configuration to the clamping element 30 described hereinabove. The clamping element 130 of the Figure 7 arrangement is again preferably formed of an appropriate metal extrusion and has a generally planar outer face 131 (which, as will become clear, acts a bearing surface) and two arcuate generally rearwardly-directed faces 132, 133, each of which has a radius of curvature equal to the exterior radius of curvature of the arcuate wall 25. A bore 134 is provided which passes through the clamping element 130, the bore 134 extending perpendicularly to the front face 131 and passing between the two arcuate faces 132, 133. A shaft 135 passes through the bore 134. As will be appreciated from Figure 7, the shaft 135 of the Figure 7 arrangement is generally rectangular in cross-section, and the bore 134 is similarly shaped so that the shaft 135 can be received therein as a close sliding fit, but is prevented from rotating within the bore 134.

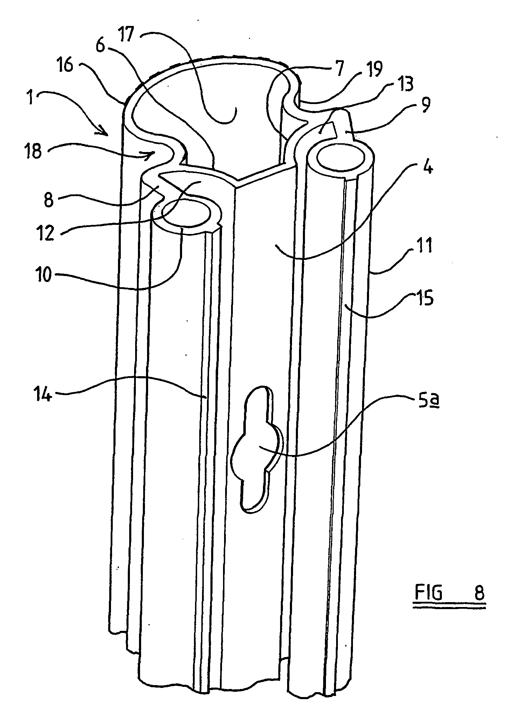

The end of a shaft 135 passing between the arcuate faces 132, 134 carries a locking lug 136. The locking lug 136 of the Figure 7 arrangement takes the form of a generally flat, circular formation. The locking lug 136 is dimensioned to be insertable into the hollow interior 17 of the post 1 through a key-hole type aperture 5a, as illustrated in Figure 8. It will be seen that the key-hole type aperture 5a is generally vertically elongate, and is provided with an enlargened circular centre portion. The lug 136 is sized to be insertable into the aperture 5a in the enlargened centre portion thereof, and once inserted therein, the lug can be moved either vertically upwards or vertically downwards, within the hollow interior 17 of the post 1 so that the lug is brought into engagement with the interior surface of the planar front face 4 of the post, at a position either above or below the enlargened centre portion of the aperture 5a.

At its other end, the shaft 135 is provided with a transverse pin 150, passing through the shaft 135, so as to project outwardly from each opposed flap side face 151 (only one illustrated in Figure 7) of the shaft 135. The pin 150 is fixed with respect to the shaft 135 to prevent removal therefrom. However, it is also envisaged that instead of providing a single pin passing entirely through the shaft 135, the shaft 135 could be provided with a pair of axially-aligned spigots, each spigot projecting from a respective side face 151 of the shaft 135. As will be seen from Figure 7, the pin 150 is circular in cross-section.

The clamp arrangement illustrated in Figure 7 further comprises a wedge component 152. The wedge component 152 comprises a pair of substantially parallel and planar wedge-shaped plates 153, 154. The wedge component 152 is preferably formed from a single sheet of metal, bent at position155.

Each wedge-shaped plate 153, 154 defines a pair of diverging and substantially straight bearing edges 156. Respective bearing edges 156 of each plate 153, 154 are parallel with one another.

Each plate 153, 154 of the wedge component 152 has a substantially straight and elongate slot 157 formed therethrough. The slot 157 at each respective plate 153, 154 is located between the bearing edges 156 of the respective plate, and is oriented at an acute angle to each said bearing edge 156. In the preferred arrangement illustrated, each slot 157 is substantially coincident with the bisector of the angle between the two bearing edges of the respective plate 153, 154.

Each slot 157 is dimensioned to receive, as a sliding fit therein, a respective end of the transverse pin 150. As will become apparent hereinafter, the slots 157 act as guides to a movement of the wedge component 152 relative to the shaft 135 .

As will be seen from Figure 7, the wedge component 152 is mounted on the shaft 135 for movement relative thereto, with the shaft 135 being received between the two wedge plates 153, 154 and each end of the pin 150 engaging a respective slot 157. In the preferred embodiment, the wedge component 152 is held captive with respect to the shaft 135.

At the end of each slot 157 nearest to the point of divergence of the bearing edges 156 of each side plate 153, 154, each slot 157 is enlargened slightly to form a generally circular part 158. This allows for easy pivotal movement between the wedge component 152 and the shaft 135.

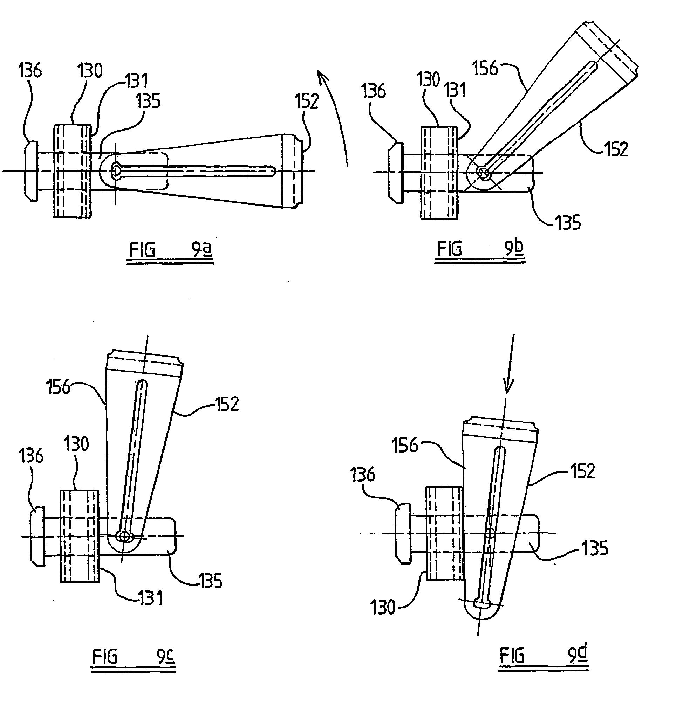

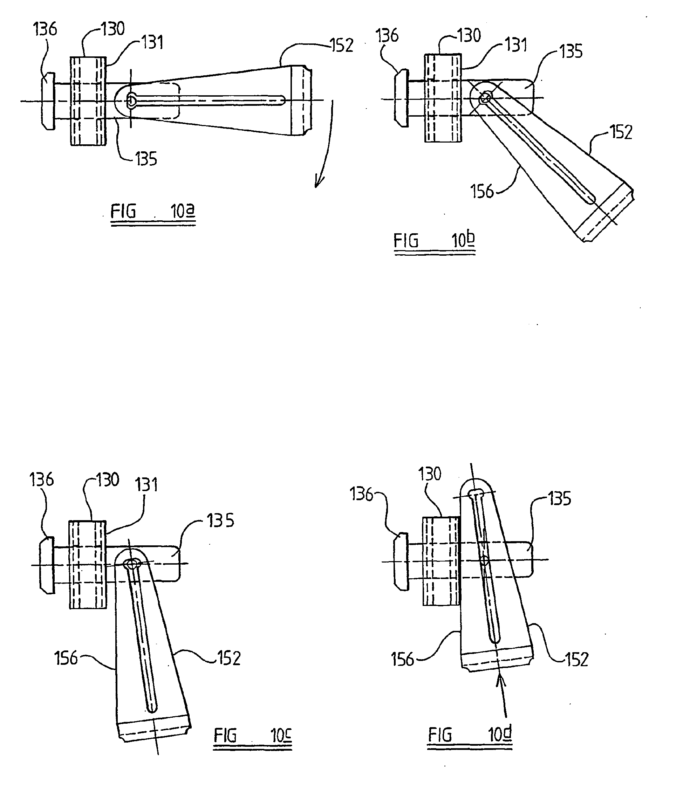

Once a plurality of posts 1 have been located in position with an appropriate spacing therebetween, and a number of panels have been offered up to the posts such that the formation 24 on the plate 21 is brought into engagement with the co-operating formations provided on the post as described previously, each clamping element 130 may then be mounted in position by initially orienting the wedge component 152 such that each end of the pin 150 is received within the enlargened portions 158 of each slot 157, which allows the clamping element 130 to be spaced as far as possible from the locking lug 136. The locking lug 136 can then be inserted within the aperture 5a and the whole clamp arrangement moved, for example, vertically downwardly, so that the lug 136 engages at the interior part of the front wall 4 of the post 1. The wedge component 152 may then be pivoted relative to the shaft 135, about the pin 150, either upwardly relative to the shaft 135 as illustrated in Figures 9a, b, or downwardly relative to the shaft 135 as illustrated in Figures 10a, b. Once the wedge element 152 has been pivoted substantially with respect to the shaft 135, so as to adopt either the position illustrated in Figure 9c, or the position illustrated in Figure 10c, the wedge component 152 can then be moved linearly with respect to the shaft 135 such that the pin 150 is allowed to move longitudinally along each guide slot 157. As illustrated in Figures 9d and 10d, this linear movement of the wedge component 152 relative to the shaft 135 will result in one of the bearing edges 156 of each side plate 153, 154 engaging the outer face 131 (the bearing surface) of the clamping element 130. Further linear movement of the wedge component 152 in the direction indicated by the arrow in Figure 9d or Figure 10d, will, due to the acute angle between the guide slots 157 and the bearing edges 156 drive the clamping element 130 towards the lug 136, such that the arcuate faces 132, 133 are driven into firm engagement with the exterior of the arcuate wall 25 of the mounting arrangement 20 and the corresponding arcuate wall of the mounting arrangement 28. The skilled person will appreciate that there will be significant resistance to further linear movement in the clamping element 152 and the shaft 135, once the bearing edges 156 engage the front face 131 of the clamping element 130, and it is therefore envisaged that to move the wedge component 152 against this resistance, it will be necessary to strike the wider end of the wedge component 152 with a hammer, for example.

In order to release the clamp arrangement illustrated in Figures 7, 9 and 10, it will be appreciated that the wedge component 152 must be moved in the opposite direction to that described above, such that the bearing edges 156 move out of engagement with the front face 131 of the clamping element 130. This movement will also be against a significant resistance and it is envisaged that such movement can be effected simply by striking the narrower end of the wedge component with a hammer.

It is envisaged that the wedge component 152 described above could be modified, in an alternative embodiment, such that the narrower end of the wedge component 152 is configured to provide a camming action similar to that described in connection with the previous clamping arrangement, For example, the wedge component 152 could be modified so as to have a cam surface in the region of the point of divergence of the bearing edges 156 of each plate 153, 154. The cam surface could be configured such the initial pivotal movement of the wedge component 152 relative to the shaft 135, about the pin 150, would urge the cam surface against the front face 131 of the clamping element 130. Thus, the initial pivotal movement of the wedge component 152 would drive the clamping element 130 towards the locking lug 136 by an initial distance, before the subsequent linear movement of the wedge component 152. This would provide a useful "two storage" clamping arrangement.

In the present specification "comprise" means "includes or consists of" and "comprising" means "including or consisting of".

## Claims

1. An arrangement for connecting a post to a panel, the arrangement comprising the post [1], a connecting element [20] for attachment to the panel [23], and clamping means for clamping the connecting element [20] to the post [1], the post [1] carrying a formation
comprising a vertical arcuate wall [6] and a vertical element [11] spaced therefrom presenting a generally cylindrical exterior wall, the centre of radius of said vertical element [11] being substantially coincident with the centre of curvature of the arcuate wall [6], an arcuate channel [12] of substantially uniform width being provided between the said vertical element and the said arcuate wall, the connecting element [20] carrying a substantially semi-circular wall [25] dimensioned to be received within the channel [12], and the clamping means being mounted on the post [1] and configured to engage said semi-circular wall [25] to clamp the connecting element [20] to the post [1].

2. An arrangement according to Claim 1 wherein the vertical element [11] presenting a generally cylindrical exterior wall is supported by means of a vertical web [9] extending from one end of the arcuate wall [6], the said vertical element [11] having a projecting rib [14] located at a position diametrically opposed to said web [9], the semi-circular wall mounted on the connecting element [20] being provided with inwardly directed lugs at opposed ends thereof.

3. An arrangement according to Claim 1 or 2 wherein the semi-circular wall [25] of the connecting element is mounted on a plate [21], means being provided for connecting the plate [21] to the panel.

4. An arrangement according to any one of the preceding Claims wherein the post [1] carries two said formations, each formation being adapted to be associated with a respective connecting element for attachment to a respective panel.

5. An arrangement according to claim 1, wherein the post [1] carries two formations, each formation comprising a vertical arcuate wall [6,7] and a vertical element [10,11] spaced therefrom presenting a generally cylindrical exterior wall, the centre of radius of each said vertical element [10,11] being substantially coincident with the centre of radius of the respective arcuate wall [6,7], a respective arcuate channel [12,13] of substantially uniform width being provided between each said vertical element [10, 11] and the associated arcuate wall [6,9], each connecting element carrying a substantially semi-circular wall dimensioned to be received within a respective channel [12,13], the being clamping means mounted on the post [1] and adapted to engage said semi-circular walls to clamp the connecting element in position.

6. An arrangement according to Claim 5 wherein the clamping means comprises a clamping element [30] mounted on a shaft protruding from the post, the clamping element [20] being movable between a release position in which it does not engage the semi-circular wall; and an engaged position in which it engages the semi-circular wall of each of the connecting elements [20] to clamp the connecting element [20] in position.

7. An arrangement according to Claim 6 wherein the clamping means comprises a pivotally mounted cam element adapted to drive the clamping means to the engaged position.

8. An arrangement according to Claim 6 wherein the clamping means comprises a wedge [152] adapted to drive the clamping means to the engaged position.

9. An arrangement according to any one of Claims 6 to 8, wherein the shaft is provided at one end with a lug adapted to be inserted through an aperture formed in the post and to be rotated to engage part of the interior of the post.

10. An arrangement according to claim 5, wherein the clamping means comprises:
- a first element protruding from the post; and a clamping element [130] moveable relative to the first element between a release position in which the clamping element [130] does not engage the semi-circular wall and an engaged position in which the clamping element engages the semi-circular wall of each of the connecting elements to clamp the connecting elements in position; the first element carrying a projection and the clamping element having a bearing surface; the clamping means further comprising
- a wedge component [152] moveable with respect to the first element and the clamping element, the wedge component [152] comprising a pair of opposed and diverging bearing edges [156], and an elongate guide located between the bearing edges and at an acute angle to each bearing edge; the guide and projection being configured to engage each other for sliding movement relative to each other as the wedge component [152] is moved relative to the first element;
the arrangement being such that the wedge component [152] can be oriented with either of its bearing edges [156] bearing against the bearing surface, so that movement of the wedge component [152] relative to the first element drives the projection and bearing surface apart, hence driving the clamping element [130] from the release position to the engaged position.

11. An arrangement according to claim 10, wherein the guide is in the form of an elongate slot [157] configured to receive the projection for sliding movement therein.

12. An arrangement according to claim 10 or claim 11, wherein each bearing edge is substantially straight.

13. An arrangement according to claim 12, wherein the guide is substantially coincident with the bisector of the angle between the two bearing edges.

14. An arrangement according to any one of claims 10 to 13, wherein the end of the guide nearest to the point of divergence of the bearing edges [156] is configured to allow pivotal movement between the guide and the projection when the projection is located at said end of the guide, and hence allow pivotal movement between the wedge component [152] and the first element.

15. An arrangement according to claim 14, wherein the wedge component [152] has a cam surface in the region of the point of divergence of the bearing edges, the cam surface being configured to bear against the bearing surface and to drive the bearing surface and the projection apart during said pivotal movement between the wedge component and the first element.

16. An arrangement according to any one of claims 10 to 15, wherein the wedge component [152] and the first element are held captive with respect to each other.

17. An arrangement according to any one of claims 10 to 16, wherein the first element comprises a body portion having a pair of opposed and substantially planar faces, each face carrying a respective said projection; the wedge component comprising a pair of substantially planar spaced apart plates, each plate having a respective pair of said bearing edges and a respective said guide; the arrangement being such that each projection engages a respective guide.

18. An arrangement according to any one of claims 10 to 17, wherein the first element is a shaft and is provided at one end with a lug adapted to be inserted through an aperture formed in the post and to engage part of the interior of the post.

19. An arrangement according to any one of Claims 5 to 18 wherein each vertical element [10,11] has a protruding rib on the cylindrical exterior wall thereof and the semi-circular wall carries two inwardly directed lugs [26,27] at opposed ends thereof.

20. An arrangement according to Claim 19 wherein the rib and lugs are configured to permit each panel to move, relative to the post, through a predetermined arc.

21. An arrangement according to Claim 20 wherein the arc is substantially 135°.

## Patentansprüche

1. Vorrichtung zum Anbringen eines Pfostens an einer Platte, wobei die Vorrichtung den Pfosten [1], ein Verbindungselement [20] zum Befestigen an der Platte [23] und ein Klemmmittel zum Klemmen des Verbindungselements [20] an den Pfosten [1] umfasst, wobei der Pfosten [1] eine Formation trägt, die eine vertikale, bogenförmige Wand [6] und ein vertikales Element [11] umfasst, das einen Abstand davon hat und eine allgemein zylindrische Außenwand darstellt, wobei die Mitte des Radius des besagten vertikalen Elements [11] im Wesentlichen mit der Mitte der Wölbung der bogenförmigen Wand [6] übereinstimmend ist, und wobei ein bogenförmiger Kanal [12] einer im Wesentlichen einheitlichen Breite zwischen dem besagten vertikalen Element und der besagten bogenförmigen Wand bereitgestellt wird, wobei ein Verbindungselement [20] eine im Wesentlichen halbkreisförmige Wand [25] trägt, die entsprechende Abmessungen hat, damit sie in den Kanal [12] aufgenommen werden kann, und die Klemmmittel sind am Pfosten [1] montiert und so konfiguriert, dass sie mit der besagten halbkreisförmigen Wand [25] in Eingriff gebracht werden können, um das Verbindungselement [20] am Pfosten [1] anzuklemmen.

2. Vorrichtung nach Anspruch 1, wobei das vertikale Element [11], das eine allgemein zylindrische Außenwand darstellt, mithilfe eines vertikalen Steges [9], der sich von einem Ende der bogenförmigen Wand [6] erstreckt, gestützt wird, wobei das besagte vertikale Element [11] eine vorstehende Rippe [14] an einer Position hat, die dem besagten Steg [9] diametrikal entgegengesetzt ist, und wobei die halbkreisförmige Wand, die am Verbindungselement [20] montiert ist, mit nach innen gerichteten Vorsprüngen an den gegenüberliegenden Enden davon ausgestattet ist.

3. Vorrichtung nach Anspruch 1 oder 2, wobei die halbkreisförmige Wand [25] des Verbindungselements auf einer Platte [21] montiert ist und wobei Mittel zum Anbringen der Platte [21] an der Tafel bereitgestellt werden.

4. Vorrichtung nach einem der vorangehenden Ansprüche, wobei der Pfosten [1] zwei besagte Formationen trägt, und wobei jede Formation so angepasst ist, dass sie mit einem entsprechenden Verbindungselement zum Befestigen an einer entsprechenden Platte assoziiert wird.

5. Vorrichtung nach Anspruch 1, wobei der besagte Pfosten [1] zwei Formationen trägt, wobei jede Formation eine vertikale, bogenförmige Wand [6, 7] und ein vertikales Element [10, 11] umfasst, das einen Abstand davon hat und eine allgemein zylindrische Außenwand darstellt, wobei die Mitte des Radius jedes besagten vertikalen Elements [10, 11] im Wesentlichen mit der Mitte der Wölbung der bogenförmigen Wand [6, 7] übereinstimmend ist, und wobei ein entsprechender bogenförmiger Kanal [12, 13] einer im Wesentlichen einheitlichen Breite zwischen jedem besagten vertikalen Element [10, 11] und der zugehörigen bogenförmigen Wand [6, 9] bereitgestellt wird, wobei jedes Verbindungselement eine im Wesentlichen halbkreisförmige Wand trägt, die entsprechende Abmessungen hat, damit sie in einen entsprechenden Kanal [12, 13] aufgenommen werden kann, und die Klemmmittel sind am Pfosten [1] montiert und so angepasst, dass sie mit den besagten bogenförmigen Wänden in Eingriff gebracht werden können, um das Verbindungselement an seinem Platz anzuklemmen.

6. Vorrichtung nach Anspruch 5, wobei das Klemmmittel ein Klemmelement [30] umfasst, das auf einer Welle montiert ist, die vom Pfosten hervorsteht, wobei das Klemmelement [20] zwischen einer Auslöseposition, an der es nicht mit der halbkreisförmigen Wand in Eingriff steht, und einer eingerasteten Position, an der es mit der halbkreisförmigen Wand jedes Verbindungselements [20] in Eingriff steht, um das Verbindungselement [20] an seinen Platz zu klemmen, beweglich ist.

7. Vorrichtung nach Anspruch 6, wobei das Klemmmittel ein drehbar montiertes Nockenelement umfasst, das so angepasst ist, dass es das Klemmmittel an die eingerastete Position treibt.

8. Vorrichtung nach Anspruch 6, wobei das Klemmmittel einen Keil [152] aufweist, der so angepasst ist, dass er das Klemmmittel an die eingerastete Position treibt.

9. Vorrichtung nach einem der Ansprüche 6 bis 8, wobei die Welle an einem Ende einen Vorsprung hat, der so angepasst ist, dass er durch eine Öffnung, die im Pfosten geformt wurde, eingeführt und so gedreht werden kann, dass er mit einem Teil des Inneren des Pfosten in Eingriff gebracht werden kann.

10. Vorrichtung nach Anspruch 5, wobei das Klemmmittel Folgendes umfasst:
- ein erstes Element, das vom Pfosten hervorsteht, und ein Klemmelement [130], das relativ zum ersten Element zwischen einer Auslöseposition, in der das Klemmelement [130] nicht mit der halbkreisförmigen Wand in Eingriff steht, und einer eingerasteten Position, an der das Klemmelement mit der halbkreisförmigen Wand jedes Verbindungselements in Eingriff steht, beweglich ist, um die Verbindungselemente an ihrem Platz anzuklemmen, wobei das erste Element einen Vorsprung trägt und das Klemmelement eine Auflagefläche hat, und wobei das Klemmmittel außerdem Folgendes umfasst:
- eine Keilkomponente [152], die bezüglich des ersten Elements und des Klemmelements beweglich ist, wobei die Keilkomponente [152] ein Paar gegenüberliegende und divergierende tragfähige Ränder [156] und eine längliche Führung, die sich zwischen den tragfähigen Rändern mit einem akuten Winkel zu jedem tragfähigen Rand befindet, umfasst, wobei die Führung und der Vorsprung so konfiguriert sind, dass sie ineinander eingreifen und somit eine Gleitbewegung relativ zueinander ermöglichen, wenn die Keilkomponente [152] relativ zum ersten Element bewegt wird;
somit ermöglicht die Vorrichtung, dass die Keilkomponente [152] mit einem ihrer tragfähigen Ränder [156] ausgerichtet werden kann, die gegen die Auflagefläche drücken, so dass eine Bewegung der Keilkomponente [152] relativ zum ersten Element den Vorsprung und die Auflagefläche auseinander treibt, und somit wird das Klemmelement [130] von der Auslöseposition an die eingerastete Position getrieben.

11. Vorrichtung nach Anspruch 10, wobei die Führung in Form eines länglichen Schlitzes ist [157], der so konfiguriert ist, dass er den Vorsprung zum Zweck der Gleitbewegung darin aufnehmen kann.

12. Vorrichtung nach Anspruch 10 oder Anspruch 11, wobei jeder tragfähige Rand im Wesentlichen gerade ist.

13. Vorrichtung nach Anspruch 12, wobei die Führung im Wesentlichen mit dem Bisektor des Winkels zwischen den beiden tragfähigen Rändern übereinstimmend ist.

14. Vorrichtung nach einem der Ansprüche 10 bis 13, wobei das Ende der Führung, das sich dem Divergenzpunkt der tragfähigen Ränder [156] am nächsten befindet, so konfiguriert wurde, dass es eine Drehbewegung zwischen der Führung und dem Vorsprung ermöglicht, wenn sich der Vorsprung am besagten Ende der Führung befindet und somit eine Drehbewegung zwischen den Keilkomponenten [152] und dem ersten Element ermöglicht.

15. Vorrichtung nach Anspruch 14, wobei die Keilkomponente [152] eine Nockenfläche im Bereich des Divergenzpunktes der tragfähigen Ränder hat, und wobei die Nockenfläche so konfiguriert ist, dass sie gegen die Auflagefläche drückt und die Auflagefläche und den Vorsprung während der besagten Drehbewegung zwischen der Keilkomponente und dem ersten Element auseinander drückt.

16. Vorrichtung nach einem der Ansprüche 10 bis 15, wobei die Keilkomponente [152] und das erste Element im Verhältnis zueinander festgehalten werden.

17. Vorrichtung nach einem der Ansprüche 10 bis 16, wobei das erste Element einen Hauptteil mit einem Paar gegenüberliegender und im Wesentlichen planarer Flächen umfasst, wobei jede Fläche einen entsprechenden besagten Vorsprung trägt, und die Keilkomponente umfasst ein Paar im Wesentlichen planare, in einem Abstand angebrachte Platten, wobei jede Platte ein entsprechendes Paar der besagten tragfähigen Ränder und eine entsprechende besagte Führung hat, und die Vorrichtung ist dementsprechend, dass jeder Vorsprung mit einer entsprechenden Führung in Eingriff ist.

18. Vorrichtung nach einem der Ansprüche 10 bis 17, wobei das erste Element eine Welle ist und an einem Ende mit einem Vorsprung ausgestattet ist, der so angepasst wurde, dass er durch eine Öffnung, die im Pfosten geformt wurde, eingeführt werden kann, um einen Teil des Inneren des Pfosten in Eingriff zu bringen.

19. Vorrichtung nach einem der Ansprüche 5 bis 18, wobei jedes vertikale Element [10, 11] eine hervorstehende Rippe an seiner zylindrischen Außenwand hat, und die halbkreisförmige Wand trägt zwei nach innen gerichtete Vorsprünge [26, 27] an seinen gegenüberliegenden Enden.

20. Vorrichtung nach Anspruch 19, wobei die Rippe und Vorsprünge so konfiguriert sind, dass sie eine Bewegung jeder Tafel relativ zum Pfosten über einen vorbestimmten Bogen ermöglichen.

21. Vorrichtung nach Anspruch 20, wobei der Bogen im Wesentlichen 135° ist.

## Revendications

1. Agencement destiné à relier un poteau à un panneau, l'agencement comprenant le poteau (1), un élément de liaison (20) destiné à être fixé au panneau (23), et des moyens de serrage destinés à monter l'élément de liaison (20) sur le poteau (1), le poteau (1) supportant une formation comprenant une paroi arquée verticale (6) et un élément vertical (11) espacé de celle-ci présentant une paroi extérieure généralement cylindrique, le centre de rayon dudit élément vertical (11) coïncidant sensiblement avec le centre de courbure de la paroi arquée (6), une gorge arquée (12) de largeur sensiblement uniforme étant prévue entre ledit élément vertical et ladite paroi arquée, l'élément de liaison (20) supportant une paroi sensiblement semi-circulaire (25) dimensionnée pour être reçue à l'intérieur de la gorge (12), et les moyens de serrage étant montés sur le poteau (1) et configurés pour entrer en prise avec ladite paroi semi-circulaire (25) pour fixer par serrage l'élément de liaison (20) au poteau (1).

2. Agencement selon la revendication 1, dans lequel l'élément vertical (11) présentant une paroi extérieure généralement cylindrique est supporté au moyen d'une bande verticale (9) s'étendant à partir d'une extrémité de la paroi arquée (6), ledit élément vertical (11) possédant une nervure en saillie (14) positionnée au niveau d'une position diamétralement opposée à ladite bande (9), la paroi semi-circulaire montée sur l'élément de liaison (20) étant pourvue d'oreilles dirigées vers l'intérieur au niveau d'extrémités opposées de celle-ci.

3. Agencement selon la revendication 1 ou 2, dans lequel la paroi semi-circulaire (25) de l'élément de liaison est montée sur une plaque (21), des moyens étant prévus pour relier la plaque (21) au panneau.

4. Agencement selon l'une quelconque des revendications précédentes, dans lequel le poteau (1) supporte deux dites formations, chaque formation étant adaptée pour être associée à un élément de liaison respectif destiné à être fixé à un panneau respectif.

5. Agencement selon la revendication 1, dans lequel le poteau (1) supporte deux formations, chaque formation comprenant une paroi arquée verticale (6, 7) et un élément vertical (10, 11) espacé de celle-ci présentant une paroi extérieure généralement cylindrique, le centre de rayon de chaque dit élément vertical (10, 11) coïncidant sensiblement avec le centre de rayon de la paroi arquée respective (6, 7), une gorge arquée respective (12, 13) de largeur sensiblement uniforme étant prévue entre chaque dit élément vertical (10, 11) et la paroi arquée associée (6, 9), chaque élément de liaison supportant une paroi sensiblement semi-circulaire dimensionnée pour être reçue à l'intérieur d'une gorge respective (12, 13), les moyens de serrage étant montés sur le poteau (1) et adaptés pour entrer en prise avec ladite paroi semi-circulaires pour fixer l'élément de liaison en position par serrage.

6. Agencement selon la revendication 5, dans lequel les moyens de serrage comprennent un élément de serrage (30) monté sur une tige faisant saillie à partir du poteau, l'élément de serrage (20) étant mobile entre une position de libération dans laquelle il n'entre pas en prise avec la paroi semi-circulaire, et une position en prise dans laquelle il entre en prise avec la paroi semi-circulaire de chacun des éléments de liaison (20) pour fixer l'élément de liaison (20) en position par serrage.

7. Agencement selon la revendication 6, dans lequel les moyens de serrage comprennent un élément de came monté de façon pivotante adapté pour entraîner les moyens de serrage jusqu'à la position en prise.

8. Agencement selon la revendication 6, dans lequel les moyens de serrage comprennent un coin (152) adapté pour entraîner les moyens de serrage jusqu'à la position en prise.

9. Agencement selon l'une quelconque des revendications 6 à 8, dans lequel la tige est pourvue, au niveau d'une extrémité, d'une patte adaptée pour être insérée à travers une ouverture formée dans le poteau et pour être tournée pour entrer en prise avec une partie de l'intérieur du poteau.

10. Agencement selon la revendication 5, dans lequel les moyens de serrage comprennent :
- un premier élément faisant saillie à partir du poteau ; et un élément de serrage (130) mobile par rapport au premier élément entre une position de libération dans laquelle l'élément de serrage (130) n'entre pas en prise avec la paroi semi-circulaire et une position en prise dans laquelle l'élément de serrage entre en prise avec la paroi semi-circulaire de chacun des éléments de liaison pour fixer les éléments de liaison en position par serrage ; le premier élément supportant une saillie et l'élément de serrage possédant une surface d'appui ; les moyens de serrage comprenant en outre
- un composant de coin (152) mobile par rapport au premier élément et l'élément de serrage, le composant de coin (152) comprenant une paire de bords d'appui opposés et divergents (156), et un guidage oblong positionné entre les bords d'appui et à un angle aigu par rapport à chaque bord d'appui ; le guidage et la saillie étant configurés pour entrer en prise l'un avec l'autre pour un mouvement coulissant l'un par rapport à l'autre lorsque le composant de coin (152) est déplacé par rapport au premier élément ;
l'agencement étant tel que le composant de coin (152) peut être orienté avec l'un de ses deux bords d'appui (156) prenant appui contre la surface d'appui, de sorte que le mouvement du composant de coin (152) par rapport au premier élément entraîne et sépare les saillie et surface d'appui, entraînant donc l'élément de serrage (130) de la position de libération à la position en prise.

11. Agencement selon la revendication 10, dans lequel le guidage présente la forme d'une fente oblongue (157) configurée pour recevoir la saillie pour un mouvement coulissant dans celle-ci.

12. Agencement selon la revendication 10 ou la revendication 11, dans lequel chaque bord d'appui est sensiblement droit.

13. Agencement selon la revendication 12, dans lequel le guidage coïncide sensiblement avec la bissection de l'angle entre les deux bords d'appui.

14. Agencement selon l'une quelconque des revendications 10 à 13, dans lequel l'extrémité du guidage la plus près du point de divergence des bords d'appui (156) est configurée pour permettre un mouvement pivotant entre le guidage et la saillie lorsque la saillie est positionnée au niveau de ladite extrémité du guidage, et donc permettre le mouvement pivotant entre le composant de coin (152) et le premier élément.

15. Agencement selon la revendication 14, dans lequel le composant de coin (152) possède une surface de came dans la région du point de divergence des bords d'appui, la surface de came étant configurée pour prendre appui contre la surface d'appui et pour entraîner et séparer la surface d'appui et la saillie au cours dudit mouvement pivotant entre le composant de coin et le premier élément.

16. Agencement selon l'une quelconque des revendications 10 à 15, dans lequel le composant de coin (152) et le premier élément sont maintenus captifs l'un par rapport à l'autre.

17. Agencement selon l'une quelconque des revendications 10 à 16, dans lequel le premier élément comprend une partie de corps possédant une paire de faces opposées et sensiblement planes, chaque face supportant une dite saillie respective ; le composant de coin comprenant une paire de plaques sensiblement planes espacées l'une de l'autre, chaque plaque possédant une paire respective desdits bords d'appui et un dit guidage respectif; l'agencement étant tel que chaque saillie entre en prise avec un guidage respectif.

18. Agencement selon l'une quelconque des revendications 10 à 17, dans lequel le premier élément est une tige et est prévue au niveau d'une extrémité avec une patte adaptée pour être insérée à travers une ouverture formée dans le poteau et pour entrer en prise avec une partie de l'intérieur du poteau.

19. Agencement selon l'une quelconque des revendications 5 à 18, dans lequel chaque élément vertical (10, 11) possède une nervure faisant saillie sur la paroi extérieure cylindrique de celui-ci et la paroi semi-circulaire supporte deux pattes dirigées vers l'intérieur (26, 27) au niveau d'extrémités opposées de celle-ci.

20. Agencement selon la revendication 19, dans lequel la nervure et les pattes sont configurées pour permettre à chaque panneau de se déplacer, par rapport au poteau, à travers un arc prédéterminé.

21. Agencement selon la revendication 20, dans lequel l'arc mesure sensiblement 135°.
